# EUROPEAN PATENT SPECIFICATION

(11) **EP 0 416 326 B1**
(45) Date of publication and mention of the grant of the patent: **25.05.1994**
(21) Application number: 90115462.5
(22) Date of filing: 11.08.1990
(51) Int. Cl.: B01D 15/00, G01N 30/24, G01N 30/60

(54) **Apparatus for automated isolate extraction using solid phase sorbent**
Vorrichtung für die automatisierte Extraktion einer Substanz durch Verwendung einer festen Sorbentphase
Dispositif pour l'extraction automatisée d'une substance à l'aide d'une phase sorbente solide

(30) Priority: 06.09.1989 US 403425
(43) Date of publication of application: 13.03.1991
(60) Divisional application: 91109002.5
(73) Proprietor: Hewlett-Packard Company, Palo Alto, California 94304 (US)
(72) Inventor: Fogelman Kimber D., Newark, DE 19711 (US); Engel, Steven J., Kennett Syuare, PA 19348 (US); Price, Thomas E., Hockessin, DE 19707 (US); Augenblick, Kurt, Wilmington, DE 19808 (US); Ganz, Avner, Newark, DE 19711 (US)
(74) Representative: Schoppe, Fritz, Dipl.-Ing.

(56) References cited:
- EP-A- 0 068 343
- EP-A- 0 266 542
- EP-A- 0 305 817
- CH-A- 509 591
- DE-A- 3 002 996
- FR-A- 2 162 494
- GB-A- 2 115 716
- GB-A- 2 162 489
- US-A- 3 915 642
- US-A- 4 094 196
- US-A- 4 283 280
- US-A- 4 347 131
- US-A- 4 836 038

## Description

This invention relates to the extraction of an isolate from a liquid sample using a solid-phase sorbent.

The use of solid-phase sorbents, e.g., bonded silica, to extract an isolate, usually a chemical compound dissolved or otherwise dispersed in a liquid sample, is known. See "Sorbent Extraction Technology" published in 1985 by Analytichem International Inc., Harbor City, CA 90710, and "Baker-10 SPE Applications Guide Vol. 1" published in 1982 by J.T. Baker Chemical Co., Phillipsburg, NJ 08865. It is also known to use disposable columns containing the sorbent between layers or discs of porous frit.

A problem with prepared, disposable columns filled with particulate sorbent between frit layers is the tendency of the packing to settle and form voids which, even when extremely small, can seriously distort the results of extraction and/or elution of the isolate. Radial compression techniques have been used to combat this problem. Rainin Instrument Co. provides packed columns with "Dynamax End-Fittings" which have a threaded axial compression nut that can be turned down prior to use to compress the frit layers and sorbent particles to eliminate voids. Such an end fitting does not lend itself to void elimination by simple axial compression of the end fittings.

It is known to introduce the liquid sample into the column from the top and to draw it down into the column by vacuum, gravity or air displacement systems. Such methods are dependent upon column back pressure and are hindered somewhat by tightly packed columns. It has also been found that such methods can cause channeling of the liquid through the sorbent. When channeling occurs the liquid sample is unevenly passed through the sorbent bed and extraction can be variable and inefficient. This is espcially noticeable when the packing density varies from column to column.

DE-A-3002996 discloses an apparatus for extracting an isolate from a liquid sample using a solid-phase sorbent contained in a column. The apparatus comprises three six-way valves, two pumps, two pre-columns and a single analytical column. A narrow tubing coil is arranged between one of said pumps and one of the six-way-valves. The disclosed method of extracting an isolate from the liquid sample comprises the steps of injecting the liquid sample into the tubing coil, introducing the liquid sample by one of the pumps into one of the pre-columns, wherein the isolate is extracted on the solid-phase sorbent, washing the solid-phase sorbent by introducing a washed solvent to displace the sample liquid from the column and introducing by the second pump an eluting solvent into the pre-column to remove the isolate out of the pre-column.

The invention is based on the object of providing an apparatus for extracting an isolate from a liquid sample using a solid-phase sorbent containing in a column cartridge which eliminates voids in the packing of prepared, disposable columns and which is suitable for automated processes.

This object is achieved by an apparatus in accordance with claim 1.

A suitable cartridge for use with the apparatus in accordance with the present invention is described in European patent application EP-A-446970.

FIG. 1 is a schematic view of an extraction apparatus of this invention.

FIG. 2 is a sectional view of a column cartridge used in this invention.

FIG. 3 is a partial sectional view of a column cartridge with an alternative end cap structure.

FIGS. 4,5,6 and 7 are partial schematic views of an apparatus of this invention arranged to carry out the steps of conditioning, Sample loading, washing and elution, respectively.

FIG. 8 is a partial sectional view of a particular needle washing and waste drain assembly.

FIG. 9 and 10 are partial sectional views of a particular sampling tip washing apparatus.

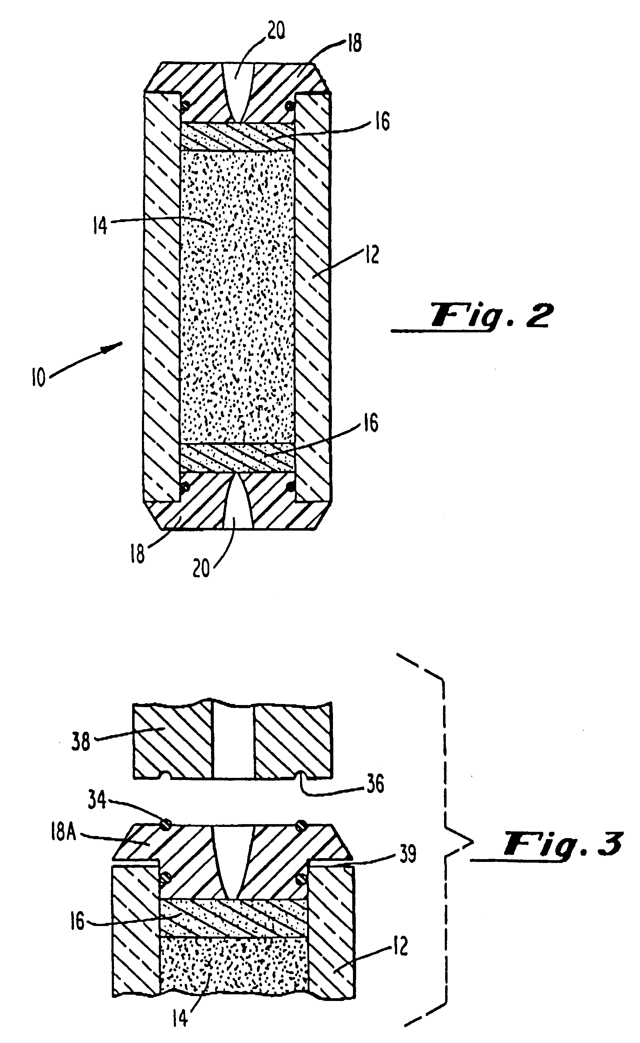

Referring now to the drawings, a cartridge column 10 is shown in FIG. 2 as having a glass column 12 packed with solid-phase sorbent 14 between two layers of frit 16. The frit permits the free passage of liquid but is rigid enough to provide a layer at each end to contain the sorbent 14. One can also use a screen or sieve instead of a frit layer.

At either end of the cartridge is an end cap 18, preferably made of a suitably inert material. The end caps in FIG. 2 are shown to have upper and lower, tapered female fittings 20 adapted to receive male sampling tips 22 and 24 on the liquid conduits 26 and 28. Both male sampling tips 22 and 24 are shown to be spring-loaded to provide for clamping, axial-pressure engagement to effect a seal at each end of cartridge column 10 and also provide for the force of the compressed springs 30 and 32 to assist in disengagement. The spring also accommodates a variety of column lengths. The end caps in FIG. 2 are shown in a tightly compressed position.

FIG 3 illustrates an alternative and preferred face-seal structure of the end cap 18A wherein o-ring washer 34 is provided to engage o-ring groove 36 in liquid conduit face 38 to effect a clamping, axial-pressure sealing engagement and easy disengagement with a liquid conduits 26 and 28. The end cap in FIG. 3 is shown with space 39 to permit the end cap to be compressed further to eliminate voids. It is also possible to use a flat gasket in place of an o-ring seal or to construct the entire end cap of a suitably compliant seal materials

The apparatus includes a base holder 40 for retaining the cartridge column 10 and sample vial 42 with a waste drain 44. The base can contain a suitable temperature control means (not shown) for the cartridge and the sample. By controlling temperature, one can either maintain or change the efficiency of the separation; i.e., the equilibrium between the solid support and the liquid phase can be regulated. Suitable temperature controls are known in the art, e.g., water circulation thermostatically controlled. An elevator 46 has a carriage 48 which can be moved up and down. The arrangement of the cartridge and the sampling tips 22 and 24 is such that the movement of carriage 48 will engage and disengage conduits 26 and 28 with cartridge 10. Arm 50 on the carriage has the conduit 26 attached to the bottom and carries two-position four-port valve 52. Connected to one port of the valve 52 is a narrow tube coil 54 whose internal volume is about the same size as the desired liquid sample to be drawn from sample vial 42.

A positive-displacement, variable flow-rate pump 56 is connected to coil 54. A suitable type of pump is one that can compress a cylinder of liquid out through coil 54 or can, by reverse pumping, withdraw liquid from coil 54 up into the pumping cylinder (not shown). A suitable pump is a syringe pump, e.g., such as commercially available from Hamilton Instrument Co.

A source of reagents 58 is attached to the pump. Included reagents therein are, for example, water, conditioning agent, e.g., methyl alcohol or acetonitrile, and wash solvent, e.g., deionized water, pH buffer solution, or appropriate organic solvent mixtures. The connection (not shown) between reagents 58 and pump 56 is such that the pump can be alternatively connected to a source of different reagents. This is easily accomplished by means well known in the art.

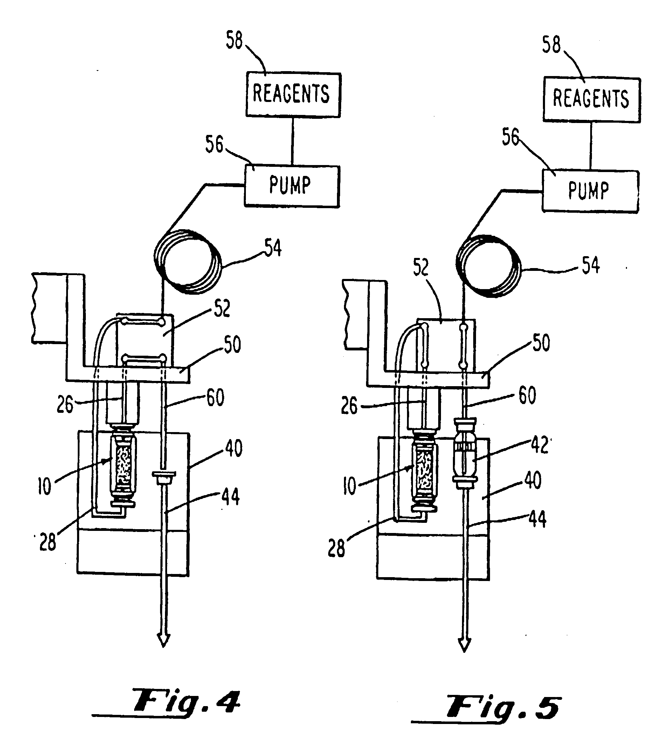

The carriage arm 50 can be lowered such that the upper and lower sampling tips 22 and 24 engage female fittings 20 in cartridge 10 and are compressed into sealing engagement against springs 30 and 32. The compressive, clamping force will also compress end caps 18 against frit layers 16 to remove any void above packing 14. If sample vial 42 is present on base 40, it will be penetrated by hollow needle 60 and will be located over waste drain 44 as in FIG. 4. In the valve 52 position shown in FIG. 4, coil 54 is connected to conduit 28 and conduit 26 is connected to needle 60.

As shown in FIG. 4, liquid conditioning agent, e.g., methanol, can be pumped from reagents 58 through coil 56 and valve 52 into conduit 28 into the base of the column of cartridge 10. Mixtures of agents may be used and different agents may be used consecutively to achieve the desired conditioning. The agent flows upwardly under the pressure of pump 56 through valve 52 and out through the needle 60 into waste drain 44, sample vial 42 having been removed. The conditioning agent carries out the function "solvation" as described in the Analytichem publication and the J.T. Baker publication referred to hereinabove. When the sorbent is, for example, a bonded silica, formed by the reaction of organosilanes with activated silica, solvation with a conditioning agent like methanol activates and wets the functional end groups on the sorbent surface and positions and enables them to extract isolate molecules from the sample liquid. The sorbents, eluting agents, conditioning agents and isolate compounds of the aforementioned publications and teachings in connection therewith are incorporated herein by reference.

After a suitable amount of conditioning agent is passed out through the column, the pump can be switched to a source of water (or another conditioning agent) to displace the bulk of the conditioning agent but not to disturb the activated sorbent surface. The water goes out through needle 60 and waste drain 44.

Next, a suitable amount of wash solvent is pumped from reagents 58 through the column 10 displacing the bulk of the water and passes out through needle 60 and waste drain 44. The wash solvent is the same as that to be used subsequently after sample extraction. At this point, the entire system from the pump to the needle is filled with wash solvent at the time that pump 56 is turned off.

The next step is to rotate valve 52 to the position shown in FIG. 5. Reverse pumping of pump 56 withdraws a suitable amount of sample liquid from vial 42 through penetrated needle 60 up into tubing coil 54. An alternative way of introducing a sample into the system is to have a sample source among the reagents 58 and to withdraw the sample by pump 56 in the same way as previously described for reagents. The amount of sample liquid withdrawn should just about fill coil 54. Because of the narrow diameter of the coil, there will be little mixing of the sample with residual wash solvent in the system. Introduction of a small air gap above the sample level will help prevent mixing.

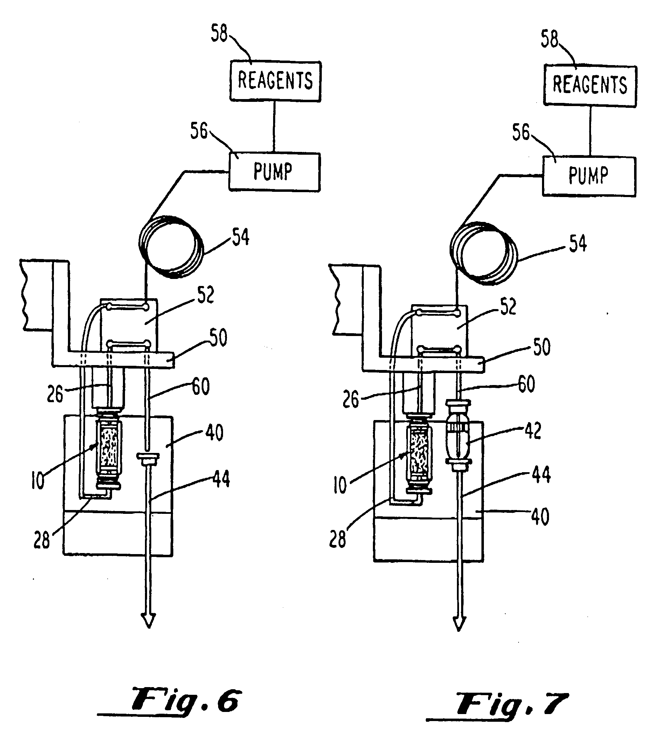

The valve 52 is turned to the position in FIG. 6 and vial 42 is removed. The pump then forces the liquid sample in the coil 54 out into the base of column 10 by pumping wash solvent from reagents 58 behind it. The rate of pumping is carefully controlled to achieve the optimum amount of contact with the sorbent to extract the isolate thereon. Next a wash solvent is pumped at a controlled rate through the column 10. The solvent is carefully selected to displace the sample liquid from coil 54 onto the column thus removing the weakly retained impurities from the sorbent without removing the isolate. Such solvent selection is within the skill of the art. The wash solvent also serves to flush out the system including the needle. Both the sample liquid and the wash solvent many be passed to Waste. However, in some cases, the isolate may be the undesired material and the isolate-free solvent liquid may be the desired material which can be recovered at that point.

It is also possible in accordance with the above procedures to load more than one sample of the same or different composition either before washing or with intermittent washing.

The final step is to arrange the apparatus as shown in FIG. 5 and to pump an appropriate eluting solvent, e.g., methanol, from reagents 58 into the column 10 at a controlled rate and amount under optimum conditions to dissolve and remove the isolate from the sorbent. The isolate-containing elution solvent can be collected in sample vial 42. More than one vial may be used consecutively to collect the sample. Optionally, the eluting solvent may be changed to elute a separate fraction of isolate from the sorbent into a separate vial. Means for automatically rotating consecutive vials under the needle may be used. It may be desirable to send the contents to an appropriate analytical device, e.g., a gas or liquid chromatograph (not shown).

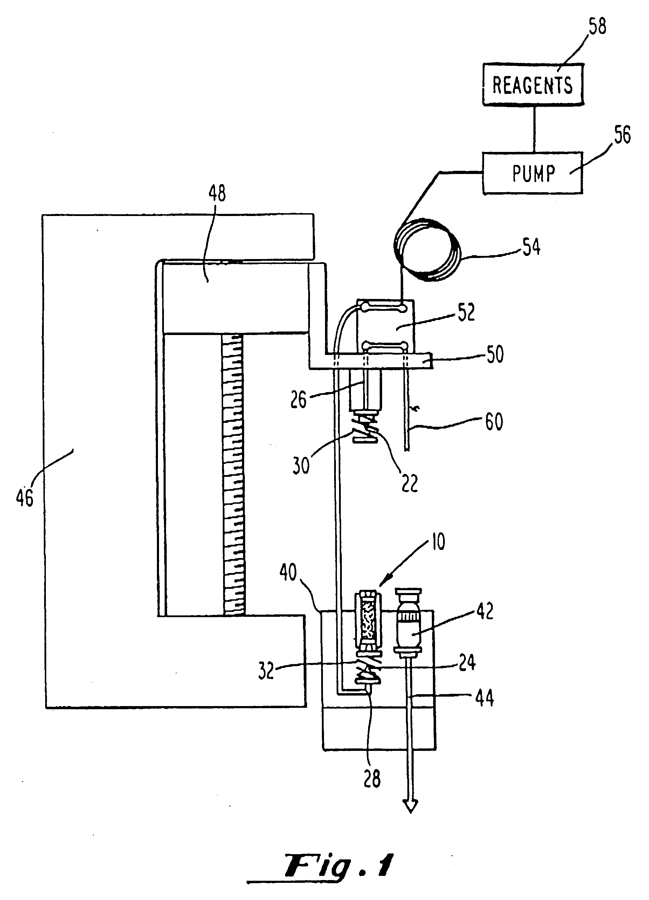

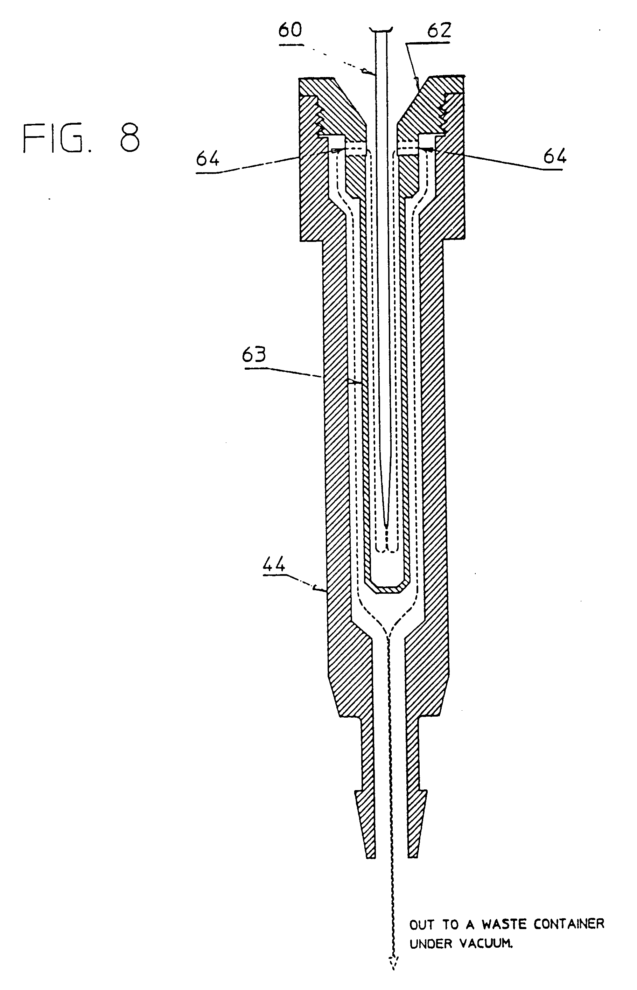

In some cases it is desirable that both the exterior and interior surface of the hollow needle 60 be washed after or before the extraction process. For such a step, the sample vial 42, and usually the cartridge 10, are removed from the apparatus of FIG. 1. Referring to FIG. 8, the assembly has a construction wherein the needle 60 is lowered through a conical drain 62 down into the bottom of tubular insert 63. The tubular insert is located inside the hollow waste drain 44 and has a pair of overflow ports 64 located near its top. During washing, two-position four-port valve 52 is turned to the position shown in FIG. 5 which connects the needle 60 to the source of reagents 58 through pump 56 and coil 54. Sample vial 42, of course, is absent and the needle is inserted as shown in FIG. 8.

The appropriate reagent, e.g., water or wash solvent, is pumped through the needle into tubular insert 63 and flows up and around the exterior of the needle 60 and out through ports 64 down through drain 44. This effectively washes both the interior and the exterior of the needle free of any prior samples or contaminants which must be removed prior to future extraction processes. Dimensions of the needle 60, tubular insert 63 and waste drain 44 are selected to afford good flow action for washing without unduly restricting fluid flow. The wash assembly can be disassembled for easy cleaning.

The geometry of column 10 can be important. Longer columns may provide better separation while wider columns provide larger sample capacity. Maintaining uniform column length may provide uniformity of results by controlling the linear velocity of elution. Vial size cartridges may contain as much as 500 mg of packing sorbent.

While the sorbent particles ordinarily act to physically adsorb or absorb the isolate, it is to be understood that sorbent particles may be used that chemically react with the sample to bond or retain the isolate which is to be removed.

The column may be of glass, medical-grade polypropylene, fluorocarbon polymer or other suitable material. The frit can be of inert materials such as fluorocarbon polymer, polyethylene, or stainless steel.

The use of a positive displacement pumping system allows for accurately controlled flow rates through the packed bed as well as enhanced ability to control the actual volume of eluent dispensed in the final analysis vial. Variable flow rate control is important in optimizing separations when changing from one type of separation to another. High pressures provided by this pumping system can allow the use of smaller diameter packing materials with a corresponding increase in resolution between analytes.

The apparatus of this invention affords the use of automated systems of extraction and analysis. Cartridges and vials may be fed by automated means, e.g., on rotating trays, to the apparatus. Computerization of the various steps in the process is also possible for optimum operation.

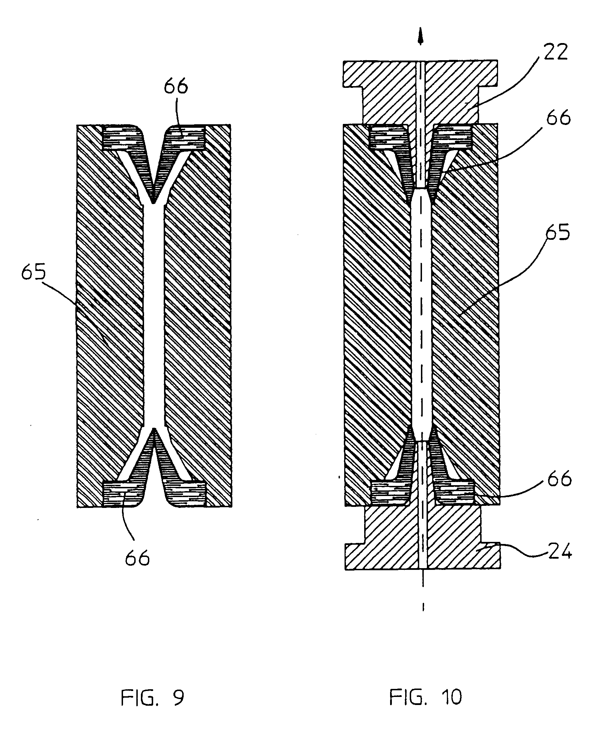

In some cases it is desirable that the interior surfaces of the sampling tips 22 and 24 and connection conduits be washed after or before the extraction process. For such a step, referring to FIG. 9, a wash cartridge 65 would replace cartridge 10 and sample vial 42 would be removed Referring to FIG. 10, during washing, the upper sampling tip 22 would be lowered such that the sampling tips 22 and 24 would pass through duckbill 66. At this point, wash fluid would be pumped through in the same manner as described for FIG. 4.

## Claims

1. Apparatus for extracting an isolate from a liquid sample using a solid-phase sorbent (14) contained in a column cartridge (10) connectable to pumping means (56) through a narrow tubing coil (54) characterized by:
- a holder (40) for retaining said column cartridge (10), said holder (40) having a lower conduit (28) with a lower sampling tip (24),
- an arm (50) having an upper conduit (26) with an upper 16 sampling tip (22),
- means (46,48) for relatively moving said arm (50) with regard to said holder (40); and
- a valve (52) comprising ports connected to said lower and upper conduits (28,26) and to said narrow tubing coil (54);
- wherein the arrangement of said column cartridge (10) and of said lower and upper sampling tips (22,24) is such that a relative movement of said arm (50) and said holder (40) will sealingly engage and disengage said sampling tips (22,24) with end caps (18) of said column cartridge (10), said end caps (18) being compressible by a compressive force exerted on said end caps (18) when sealingly engaging them with said sampling tips (22,24) to remove any void above said solid-phase sorbent (14) contained in said column cartridge (10).

2. The apparatus as claimed in claim 1, characterized in that
said holder (40) is arranged for retaining a sample vial (42) above a waste drain (44); and
said valve (52) further comprises a port connected to a needle (60) fixed to said arm (50).

3. The apparatus as claimed in claim 1 or 2, characterized in that
said sampling tips (22,24) are spring-loaded by springs (30,32) arranged at said arm (50) and at said holder (40) such that the force of said compressed springs and said end caps (18) assists in disengaging said sampling tips (22,24) from said end caps (18) of said column cartridge (10).

4. The apparatus as claimed in one of the claims 1 to 3, characterized in that
said pumping means is a positive displacement pump (56).

5. The apparatus of claim 4, characterized by
means (63) for passing wash solvent through the interior and over the exterior of said needle (60).

6. The apparatus of claim 1, characterized by
an engageable tubular insert (63) having overflow ports (64), into which insert (63) said needle (60) may be inserted and in which wash solvent may be passed through said needle (60) into said tubular insert (63), along the exterior of said needle (60) and out through said overflow ports (64).

7. The apparatus of one of the claims 1 to 6, characterized in that
said column cartridge (10) is a solid-phase extraction cartridge (10) comprising a column (12) containing solid-phase sorbent particles (14) with a porous separation layer (16) above and below said sorbent particles (14), an end cap (18) above and below said separation layers (16) with an aperture (20) therein permitting liquid to pass through, said end caps (18) having sealing means (20;34) adapted to engage and disengage conduits (26,28) for said liquid, said end caps (18) further being compressible into said column to eliminate significant voids between said separation layers (16) upon the application of axial pressure through said conduits (26,28).

8. The apparatus of claim 7, characterized in that
the end caps (18) of the cartridge (10) are made of a suitably chemically inert polymer, preferably a fluorocarbon polymer.

9. The apparatus defined in claim 7 or 8, characterized in that
the column (12) consists of glass or a suitably chemically inert polymer.

10. The apparatus defind in claim 7, characterized in that
said porous separation layer (16) is a layer of frit or a screen or a sieve.

11. The apparatus defined in one of the claims 1 to 10, characterized in that
said end caps (18) comprise sealing means provided with luer fittings or a face seal or a core seal or O-ring washers.

12. The apparatus defined in claim 10, characterized in that
the frit comprises fluorocarbon polymer particles.

## Patentansprüche

1. Gerät zum Extrahieren eines zu isolierenden Stoffes aus einer Flüssigkeitsprobe unter Verwendung eines sobierenden Stoffes in fester Phase (14), welcher in einer Säulenpatrone (10) enthalten ist, die mit einer Pumpeinrichtung (56) mittels einer engen Röhrenspule (54) verbindbar ist, gekennzeichnet durch:
- einen Halter (40) zum Halten der Säulenpatrone (10), wobei der Halter eine untere Leitung (28) mit einer unteren Probenspitze (24) hat,
- einen Arm (50) mit einer oberen Leitung (26) mit einer oberen Probenspitze (22),
- eine Einrichtung (46, 48) zum relativen Bewegen des Armes (50) bezüglich des Halters (40); und
- ein Ventil (52) mit Toren, die mit der unteren und der oberen Leitung (28, 26) und der engen Röhrenspule (54) verbunden sind;
- wobei die Anordnung der Säulenpatrone (10) und der unteren und oberen Probenspitze (22, 24) derart ist, daß eine Relativbewegung des Armes (50) und des Halters (40) die Probenspitzen (22, 24) mit Endkappen (18) der Säulenpatrone (10) dichtend in Eingriff und außer Eingriff bringt, wobei die Endkappen (18) durch eine Druckkraft zusammendrückbar sind, welche auf die Endkappen (18) ausgeübt wird, wenn diese dichtend mit den Probenspitzen (22, 24) in Eingriff gebracht werden, um jegliche Hohlräume oberhalb des sorbierenden Stoffes in fester Phase (14), der in der Säulenpatrone (10) enthalten ist, zu entfernen.

2. Das Gerät nach Anspruch 1, dadurch gekennzeichnet, daß
der Halter (40) angeordnet ist, um eine Probenphiole (42) oberhalb eines Abflusses (44) zu halten; und
das Ventil (52) ferner ein Tor umfaßt, welches mit einer Nadel (60) verbunden ist, die an dem Arm (50) befestigt ist.

3. Das Gerät nach Anspruch 1 oder 2, dadurch gekennzeichnet, daß
die Probenspitzen (22, 24) mittels Federn (30, 32), die an dem Arm (50) und an dem Halter (40) angeordnet sind, derart mit einer Federkraft vorgespannt sind, daß die Kraft der zusammengedrückten Federn und der Endkappen (18) das Außereingriffbringen der Probenspitzen (22, 24) mit den Endkappen (18) der Säulenpatrone (10) unterstützt.

4. Das Gerät nach einem der Ansprüche 1 bis 3, dadurch gekennzeichnet, daß
die Pumpeinrichtung eine Pumpe (56) mit positiver Verdrängung ist.

5. Das Gerät nach Anspruch 4, gekennzeichnet durch
eine Einrichtung zum Hindurchführen einer Waschlösung durch das Innere und über das Äußere der Nadel (60).

6. Das Gerät nach Anspruch 1, gekennzeichnet durch
einen in Eingriff bringbaren Schlaucheinsatz (63) mit Überlauftoren (64), wobei die Nadel in den Einsatz (63) einsetzbar ist und wobei eine Waschlösung durch die Nadel (60) in den schlauchförmigen Einsatz (63), entlang des Äußeren der Nadel (60) und heraus durch die Überlauftore (64) geführt werden kann.

7. Das Gerät nach einem der Ansprüche 1 bis 6, dadurch gekennzeichnet, daß
die Säulenpatrone (10) eine Festphasenextraktionspatrone (10) ist, welche eine Säule (12) umfaßt, die sorbierende Partikel (14) in fester Phase mit einer porösen Trennschicht (16) oberhalb und unterhalb der sorbierenden Partikel (14), eine Endkappe (18) oberhalb und unterhalb der Trennschichten (16) mit einer darin vorgesehenen Öffnung (20), welche einen Fluiddurchtritt ermöglicht, umfaßt, wobei die Endkappen (18) eine Dichteinrichtung (20; 34) haben, die dazu geeignet ist, mit Leitungen (26, 28) für die Flüssigkeit Eingriff zu nehmen und mit diesen außer Eingriff zu kommen, wobei die Endkappen (18) ferner in die Säule hinein zusammdrückbar sind, um nennenswerte Hohlräume zwischen den Trennschichten (16) bei Anwendung eines Axialdruckes durch die Leitungen (26, 28) zu beseitigen.

8. Das Gerät nach Anspruch 7, dadurch gekennzeichnet, daß
die Endkappen (18) der Patrone (10) aus einem geeigneten, chemisch inerten Polymer, vorzugsweise aus Fluorkohlenstoff-Polymer, bestehen.

9. Das Gerät nach Anspruch 7 oder 8, dadurch gekennzeichnet, daß
die Säule (12) aus Glas oder einem geeignetem, chemisch inerten Polymer besteht.

10. Das Gerät nach Anspruch 7, dadurch gekennzeichnet,
daß die poröse Trennschicht (16) eine Fritteschicht oder ein Sieb oder ein Siebfilter ist.

11. Das Gerät nach einem der Ansprüche 1 bis 10, dadurch gekennzeichnet, daß
die Endkappen (18) eine Dichteinrichtung umfassen, die mit Luer-Dichtungen oder einer Flächendichtung oder einer Kerndichtung oder mit O-Ring-Dichtungen versehen ist.

12. Das Gerät nach Anspruch 10, dadurch gekennzeichnet, daß
die Fritte Fluorkohlenstoff-Polymer-Partikel aufweist.

## Revendications

1. Dispositif pour extraire une partie isolée à partir d'un échantillon de liquide en utilisant un absorbant (14) en phase solide contenu dans une cartouche (10) en colonne pouvant être reliée à des moyens de pompage (56) par l'intermédiaire d'un enroulement hélicoïdal (54) formant tuyauterie étroite, caractérisé en ce qu'il comporte:
- un support (40) destiné à retenir ladite cartouche (10) en colonne, ledit support (40) ayant un conduit inférieur (28) ayant un embout inférieur (24) d'échantillonnage,
- un bras (50) comportant un conduit supérieur (26) ayant un embout supérieur (22) d'échantillonnage,
- des moyens (46, 48) destinés à déplacer de manière relative ledit bras (50) par rapport audit support (40), et
- une vanne (52) comportant des orifices reliés auxdits conduits inférieur et supérieur (28, 26) et audit enroulement hélicoïdal (54) formant tuyauterie étroite,
- dans lequel l'agencement de ladite cartouche (10) en colonne et desdits embouts d'échantillonnage inférieur et supérieur (22, 24) est tel qu'un déplacement relatif dudit bras (50) et dudit support (40) met en contact de manière étanche, et libère, lesdits embouts d'échantillonnage (22, 24) avec des bouchons d'extrémité (18) de ladite cartouche (10) formant colonne, lesdits bouchons d'extrémité (18) pouvant être comprimés par une force de compression exercée sur lesdits bouchons d'extrémité (18) lorsqu'ils viennent en contact étanche avec lesdits embouts d'échantillonnage (22, 24) pour supprimer tout vide existant au-dessus dudit absorbant (14) en phase liquide contenu dans ladite cartouche (10) en colonne.

2. Dispositif selon la revendication 1, caractérisé en ce que ledit support (40) est agencé pour retenir un flacon d'échantillon (42) au-dessus d'une canalisation d'évacuation (44), et
ladite vanne (52) comporte en outre un orifice relié à une aiguille (60) fixée sur ledit bras (50).

3. Dispositif selon la revendication 1 ou 2, caractérisé en ce que lesdits enbouts d'échantillonnage (22, 24) sont rappelés de manière élastique par des ressorts (30, 32) agencés au niveau dudit bras (50) et au niveau dudit support (40) de telle sorte que la force des ressorts comprimés et desdits bouchons d'extrémité (18) aide à la libération desdits enbouts d'échantillonnage (22, 24) à partir desdits bouchons d'extrémité (18) de ladite cartouche (10) en colonne.

4. Dispositif selon l'une quelconque des revendications 1 à 3, caractérisé en ce que lesdits moyens de pompage sont constitués d'une pompe volumétrique (56).

5. Dispositif selon la revendication 4, caractérisé en ce qu'il comporte des moyens (63) pour faire passer du solvant de lavage à travers l'intérieur et sur l'extérieur de ladite aiguille (60).

6. Dispositif selon la revendication 1, caractérisé en ce qu'il comporte un élément rapporté (63) tubulaire pouvant être mis en prise comportant des orifices (64) de débordement, élément rapporté (63) dans lequel ladite aiguille (60) peut être insérée et dans lequel du solvant de lavage peut être mis en circulation à travers ladite aiguille (60) jusque dans ledit élément rapporté tubulaire (63), le long de la partie extérieure de ladite aiguille (60) et sortir à travers lesdits orifices de débordement (64).

7. Dispositif selon l'une quelconque des revendications 1 à 6, caractérisé en ce que ladite cartouche (10) en colonne est une cartouche (10) d'extraction en phase solide comportant une colonne (12) contenant des particules (14) d'absorbant en phase solide, ayant une couche de séparation poreuse (16) située au-dessus et en-dessous desdites particules d'absorbant (14), et un bouchon d'extrémité (18) au-dessus et en-dessous desdites couches de séparation (16) et muni d'une ouverture (20) à travers laquelle du liquide peut passer, lesdits bouchons d'extrémité (18) comportant des moyens d'étanchéité (20; 34) adaptés pour venir en contact, et être libérés, avec les conduits (26, 28) destinés auxdits liquides, lesdits bouchons d'extrémité (18) pouvant en outre être comprimés dans ladite colonne pour éliminer les vides importants existant entre lesdites couches de séparation (16) lors de l'application d'une pression axiale à travers lesdits conduits (26, 28).

8. Dispositif selon la revendication 7, caractérisé en ce que les bouchons d'extrémité (18) de la cartouche (10) sont constitués d'un polymère adapté inerte chimiquement, de préférence un polymère fluorocarboné.

9. Dispositif selon la revendication 7 ou 8, caractérisé en ce que la colonne (12) est constituée de verre ou de polymère inerte chimiquement adapté.

10. Dispositif selon la revendication 7, caractérisé en ce que ladite couche poreuse de séparation (16) est une couche de fritte ou un tamis ou un crible.

11. Dispositif selon l'une quelconque des revendications 1 à 10, caractérisé en ce que lesdits bouchons d'extrémité (18) comportent des moyens d'étanchéité munis de raccords élastiques ou d'un joint de face ou d'un joint de noyau ou de rondelles formant joint torique.

12. Dispositif selon la revendication 10, caractérisé en ce que la fritte est constituée de polymère fluorocarboné.
